(19) Europäisches Patentamt
European Patent Office
Office européen des brevets

(11) Veröffentlichungsnummer: **0 136 621**
**A2**

(12) **EUROPÄISCHE PATENTANMELDUNG**

(21) Anmeldenummer: **84111142.0**

(22) Anmeldetag: **19.09.84**

(51) Int. Cl.[4]: **C 08 G 63/62**
B 01 D 13/04

(30) Priorität: **30.09.83 DE 3335591**
**10.03.84 DE 3408804**

(43) Veröffentlichungstag der Anmeldung:
**10.04.85 Patentblatt 85/15**

(84) Benannte Vertragsstaaten:
**CH DE FR GB IT LI NL SE**

(71) Anmelder: **BAYER AG**
**Konzernverwaltung RP Patentabteilung**
**D-5090 Leverkusen 1 Bayerwerk(DE)**

(72) Erfinder: **Schreckenberg, Manfred**
**Bärenstrasse 14**
**D-4150 Krefeld(DE)**

(72) Erfinder: **Dhein, Rolf, Dr.**
**Deswatinesstrasse 30**
**D-4150 Krefeld(DE)**

(72) Erfinder: **Lange, Ralf, Dr.**
**Bethelstrasse 19**
**D-4150 Krefeld(DE)**

(72) Erfinder: **Waldenrath, Werner, Dipl.-Ing.**
**Maastrichter Strasse 40**
**D-5000 Koeln 1(DE)**

(54) **Polyether-Copolycarbonate für Dialysemembranen.**

(57) Gegenstand der vorliegenden Erfindung sind ein Verfahren zur Herstellung von Polyether-Copolycarbonaten, ein Verfahren zu deren Stabilisierung, ein Verfahren zur Herstellung von Membranen aus den erfindungsgemäß hergestellten Polyether-Copolycarbonaten, nach dem erfindungsgemäßen Verfahren erhältliche Membranen sowie deren Verwendung für die Dialyse, die Ultrafiltration und die Umkehrosmose.

EP 0 136 621 A2

Croydon Printing Company Ltd.

BAYER AKTIENGESELLSCHAFT
Konzernverwaltung RP
Patentabteilung

5090 Leverkusen, Bayerwerk

PS/by-c

## Polyether-Copolycarbonate für Dialysemembranen

Gegenstand der vorliegenden Erfindung ist ein Verfahren zur Herstellung von segmentierten, aliphatisch-aromatischen Polyether-Copolycarbonaten mit $\bar{M}w$ (Gewichtsmittel) von 50 000 bis 350 000, vorzugsweise von 100 000 bis 250 000, und mit etwa 95 Gew.-% bis etwa 65 Gew.-% aromatischen Carbonat-Struktureinheiten der Formel (I)

$$\left[ -D-\underset{\overset{\|}{O}}{C}- \right] \qquad (I),$$

worin -D- ein Diphenolat-Rest mit vorzugsweise 12 bis 30 C -Atomen und insbesondere 12 bis 24 C-Atomen ist, und etwa 5 Gew.-% bis etwa 35 Gew.-% Polyethercarbonat-Struktureinheiten der Formel (II)

$$\left[ -O\text{-}Polyether\text{-}O-\underset{\overset{\|}{O}}{C}- \right] \qquad (II),$$

worin -O-Polyether-O- ein aliphatischer Polyetherdiolat-Rest mit $\bar{M}n$ von 600 bis 20 000, vorzugsweise von 4000 bis 10 000 ist, und gegebenenfalls außerdem noch Arylcarbonat-Struktureinheiten der Formel (III)

$$\left[ Ar-O-\underset{\underset{O}{\|}}{C}- \right] \qquad (III),$$

worin Ar ein carbocyclischer, aromatischer Rest mit vorzugsweise 6 bis 16 C-Atomen ist, nach dem Phasengrenzflächenverfahren in einem Gemisch aus organischem Lösungsmittel und wäßriger alkalischer Phase bei Temperaturen von 0°C bis 35°C, vorzugsweise von 10°C bis 20°C, aus entsprechenden Mengen an aliphatischen Polyetherdiolen mit $\bar{M}n$ von 600 bis 20 000, vorzugsweise von 4000 bis 10 000, Diphenolen, Kohlensäurehalogeniden und gegebenenfalls monophenolischen Kettenabbrechern, das dadurch gekennzeichnet ist, daß

a) ein Kohlensäurehalogenid in einem molaren Überschuß von vorzugsweise 70 bis 200 Mol-%, bezogen auf Mole an organischen Dihydroxyverbindungen, eingesetzt und die einzusetzenden Diphenole aus 50 Gew.-% bis 99 Gew.-%, vorzugsweise aus 70 Gew.-% bis 98 Gew.-% und insbesondere aus 80 Gew.-% bis 95 Gew.-% an Bisphenol-A und aus 50 Gew.-% bis 1 Gew.-%, vorzugsweise aus 30 Gew.-% bis 2 Gew.-% und insbesondere aus 20 Gew.-% bis 5 Gew.-% an anderen Diphenolen bestehen,

b) die wäßrige Phase bei einem pH-Wert von mindestens 13 gehalten wird und

c) durch Zugabe eines Aminkatalysators in einem Reaktor polykondensiert wird,

wobei das Polyether-Polycarbonat über die organische Phase in bekannter Weise gereinigt, isoliert und getrocknet wird.

Der unmittelbare Einbau von aliphatischen Polyetherdiolen bei der Herstellung von hochmolekularen, aliphatisch-aromatischen Polycarbonaten nach dem Lösungsverfahren gelang bislang nur in homogener Phase nach dem sogenannten Pyridinverfahren (siehe beispielsweise US-Patent 4 160 791) während bei Einsatz des Zweiphasengrenzflächenverfahrens die aliphatischen OH-Gruppen der Polyether vorab in reaktionsfähigere Endgruppen überführt werden müssen (siehe beispielsweise "Eugene Goldberg, Journal of Polymer Science, Part C. No. 4, Seiten 707-730, insbesondere 719, 1964; sowie DE-AS 1 162 559, DE-OS 26 36 783, DE-OS 26 19 831, DE-OS 26 36 784, DE-OS 26 50 533, DE-OS 27 26 416, DE-OS 28 27 325, DE-OS 28 37 526, EP-OS 0004 020, DE-OS 29 30 787 und DE-OS 31 20 594).

Zwar wird in der Literatur auch die Möglichkeit des direkten Einbaus nach dem Zweiphasengrenzflächenverfahren angedeutet (siehe US-Patent 3 161 616, Spalte 6, Zeilen 7-12, US-Patent 3 030 335, Spalte 5, Zeilen 49-54 und Jap. Patent Publikation 44-15433 von Asahi Chem. Ind. (Anmeldenummer 41-33532)), doch fehlen darin nähere Angaben über Phosgenmenge und einzuhaltende pH-Werte. Aus der Canadischen Patentschrift 715 142 (Beispiel 8) ist bekannt, daß nach dem Phasengrenzflächenverfahren bei spezieller Reaktionsführung gemischt aliphatisch-

aromatische Hydroxyverbindungen in die Polycarbonatbildung auch mit ihren aliphatischen OH-Gruppen einbezogen werden, während gemäß DE-OS 2 119 775 nach dem Phasengrenzflächenverfahren bei pH-Werten von 8 bis 13,5, vorzugsweise von 12 bis 13 nur aromatische OH-Gruppen in die Polycarbonatbildung einbezogen werden.

Gemäß DE-OS 2 446 107 werden aliphatische oder aliphatisch-aromatische Polycarbonate mit Molekulargewichten von 400 bis 20 000 und OH-Endgruppen unter Verwendung 30 bis 50 %iger wäßriger Alkalilösungen nach dem Phasengrenzflächenverfahren hergestellt. Höhermolekulare Polyetherglykole werden dabei jedoch nicht einbezogen. Der Einsatz von Phosgen erfolgt im Überschuß (siehe Beispiele 1 und 3 der DE-OS 2 446 107).

Die nach dem erfindungsgemäßen Verfahren erhältlichen Polyether-Polycarbonate zeigen gelegentlich Alterungserscheinungen beim Lagern. Dies äußert sich beispielsweise in einem Geruch nach Formaldehyd oder in einer Änderung der Viskosität des Materials. Zur Verhinderung dieser Alterung kann man die erfindungsgemäß erhältlichen Polyether-Polycarbonate stabilisieren durch Zusatz von 10 bis 1000 ppm, vorzugsweise 50 bis 500 ppm, bezogen auf Gewicht Polyether-Polycarbonat, eines phenolischen Stabilisators.

Der Stabilisator kann nach der Polykondensation und während der Aufarbeitung zugefügt werden, bevorzugt setzt man ihn zu, nachdem das Produkt mit destilliertem

Wasser gewaschen ist. Die Art der Zugabe ist unkritisch, man muß lediglich für eine gleichmäßige Verteilung des Stabilisators sorgen. Am besten geschieht dies, indem man den Stabilisator in einem Lösungsmittel, beispielsweise $CH_2Cl_2$ löst, und in dieser Form der Lösung des Polyether-Polycarbonats zufügt.

Ein weiterer Gegenstand der vorliegenden Erfindung ist somit die Ergänzung des oben beschriebenen Herstellungsverfahrens, die dadurch gekennzeichnet ist, daß man

d) nach der Polykondensation, aber vor der Isolierung des Polyether-Copolycarbonats einen phenolischen Stabilisator in Mengen von 10 bis 1000 ppm, vorzugsweise von 50 bis 500 ppm, bezogen auf Gewicht Polyether-Copolycarbonat, zusetzt.

Gemäß "Goldberg, loc. cit., Seiten 715, 716 und 726" bringt der Zusatz von Antioxidantien für die Stabilität von 6-10 mils (~150 bis 250 µm) dicken Polyether-Polycarbonatfilmen bei Temperaturen von 100°C bis 150°C nur einen mäßigen Erfolg. In den US-Patenten 3 161 615, (Spalte 12, Zeile 4) und 3 030 335 (Spalte 8, Zeile 38) wird lediglich die Möglichkeit des Stabilisatorzusatzes erwähnt. In den bereits zitierten deutschen Offenlegungsschriften 2 636 783, 2 636 784, 2 726 416 und 2 827 325 wird die Stabilisierung gegen UV-Einwirkung und Hydrolyse dargelegt, in der DE-OS 3 120 594 die Möglichkeit der Stabilisierung gegen Feuchtigkeits-, Hitze- und UV-Einwirkung lediglich erwähnt.

Die nach dem erfindungsgemäß mit oder ohne Stabilisatorzusatz durchgeführten Verfahren erhältlichen Polyether-Copolycarbonate sind in Form von Membranen einer Dicke von etwa 10 µm bis etwa 50 µm, vorzugsweise von etwa 15 µm bis etwa 30 µm, hervorragend für die Dialyse, Ultrafiltration und Umkehrosmose geeignet und sind beispielsweise in der Medizin für die Blutreinigung verwendbar.

Ein weiterer Gegenstand der vorliegenden Erfindung ist somit auch die Herstellung von Polyether-Copolycarbonat-Membranen einer Dicke von 10 µm bis 50 µm, vorzugsweise von 15 µm bis 30 µm, in Ergänzung der oben beschriebenen Herstellungsverfahren, die dadurch gekennzeichnet ist, daß man mit oder ohne Einbeziehung der Stufe d), e) die erfindungsgemäß erhältlichen Polyether-Polycarbonate in mit Wasser mischbaren organischen Lösungsmitteln in Mengen von 1 bis 20 Gew.-%, bezogen auf Gewicht Lösung, löst, nach Filtration auf einer glatten Oberfläche in bekannter Weise zu Filmen einer Naßschichtdicke von etwa 150 µm bis etwa 240 µm gießt, und nach dem Verdampfen eines Teils des Lösungsmittels diese Filme mehrmals in entsalztem Wasser wässert.

Membranen einer Dicke von etwa 10 µm bis etwa 50 µm aus den in Rede stehenden Polyether-Copolycarbonaten sind in der Literatur unseres Erachtens bislang nicht beschrieben.

Bekannt sind zwar Filme aus Polyether-Copolycarbonaten (siehe beispielsweise US-Patente 3 161 615 und 3 030 335 und deutsche Offenlegungsschriften 2 636 784, 2 636 783, 2 726 416 und 2 827 325 sowie EP-OS 4020) sowie die Verwendung von Filmen aus Polyether-Copolycarbonaten für medizinische Verpackungen (siehe DE-OS 2 907 951 und DE-OS 2 930 787), wobei allerdings nur in den beiden letzten Literaturstellen Filmdicken offenbart sind, welche jeweils mindestens 100 µm betragen (siehe DE-OS 2 907 951, Seite 19 und DE-OS 2 930 787, Seite 44).

Andererseits sind aus der Literatur Filme und Membranen von Polyether-Polycarbonaten bekannt, wo der Polycarbonatteil nur aus Bisphenol-A aufgebaut ist (siehe beispielsweise "Journal of Polymer Science, Part C, No. 4, Seiten 707-730 (loc. cit.), DE-OS 2 152 356, US-PS 4 160 791, US-PS 4 075 108, DE-OS 2 510 337, DE-OS 2 711 498, US-PS 4 069 151, DE-OS 2 713 283, DE-PS 2 921 138, DE-OS 2 932 737, DE-OS 2 932 761, EP-OS 46 816, EP-OS 46 817 sowie R.E. Kesting, J. Macromol Sci. Chem., A4(3), Seiten 655 bis 664, Mai 1970, E. Chiellini et al., Informations Chimie, No. 176, Seiten 221 und 222, April 1978 und B.H. Barbour et al., Vol. XXI, Trans. Amer. Soc. Artif. Int. Organs, 1975, Seiten 144 bis 155).

Lediglich aus der DE-OS 2 251 066 sind Membranen aus Polyether-Polycarbonaten bekannt, worin der Carbonatteil aus zwei verschiedenen Diolen, einem aromatischen Diol und einem cycloaliphatischen Diol aufgebaut sein kann (siehe Seiten 7, 8, 9 und 26 der DE-OS 2 251 066).

Polyether-Copolycarbonat-Membranen auf Basis von zwei verschiedenen Diphenolen sind unseres Erachtens in der DE-OS 2 251 066 nicht expressis verbis beschrieben.

Ein weiterer Gegenstand der vorliegenden Erfindung sind somit die nach dem erfindungsgemäßen Verfahren erhältlichen Polyether-Copolycarbonat-Membranen, welche sowohl mit als auch ohne phenolischen Stabilisator versehen sein können.

Die Stabilisierung von Polyether-Polycarbonat-Folien einer Dicke bis maximal etwa 50 µm mit phenolischen Stabilisatoren ist in der Literatur nicht erwähnt, vielmehr wird bei derartigen dünnen Folien, also bei Polyether-Polycarbonat-Membranen eine Lagerung in einem Stabilisierungsmittel empfohlen (siehe deutsche Offenlegungsschriften 2 510 337 (Seite 13), 2 711 498 (Seite 17), 2 713 283 (Seite 17), 2 932 761 (Seite 6) und europäische Offenlegungsschriften 46 816 (Seite 12) und 46 817 (Seite 8)).

Die Verwendung von Membranen aus Polyether-Polycarbonaten für die Dialyse ist bereits bekannt (siehe beispielsweise R.E. Kesting, J. Macromol. Sci.-Chem, A4(3), Seiten 655 bis 664, Mai 1970; E. Chiellini et al., Informations Chimie No. 176, Seiten 221 bis 222, April 1978 und B.H. Barbour et al., Vol. XXI, Trans. Amer. Soc. Artif. Int. Organs, 1975, Seiten 144 bis 155). Ebenso ist die Verwendung von Membranen aus Polyether-Polycarbonaten für die Ultrafiltration

und für die Umkehrosmose bekannt (siehe beispielsweise DE-OS 2 932 737, Seite 7).

Die Verwendung der erfindungsgemäß erhältlichen Polyether-Copolycarbonat-Membranen für die Dialyse, die Ultrafiltration und die Umkehrosmose ist begründet in der guten Eigenschaftskombination der Membranen, welche gute Vitamin-B-12-Permeabilität, Transparenz und verbesserte Berstfestigkeit vereint, was bessere Ausschlußraten und insgesamt kürzere Dialysezeiten ermöglicht, wobei die Membranen zudem frei von unerwünschten Pyridinresten sind und in ihrem Eigenschaftbild kaum Schwankungen unterliegen sowie eine geringere Kristallisationstendenz haben.

Ein weiterer Gegenstand der vorliegenden Erfindung ist somit die Verwendung der nach dem erfindungsgemäßen Verfahren erhältlichen Polyether-Copolycarbonat-Membranen für die Dialyse, die Ultrafiltration und die Umkehrosmose.

Die bisher bekannten Verfahren für die Herstellung von Membranen aus Polyether-Polycarbonaten haben Nachteile, wenn es um die technische Herstellung von Polyether-Polycarbonaten für Membranen geht.

Nachteilig für das Verfahren in homogener Lösung zur Herstellung von Polyether-Polycarbonaten ist die vollständige Entfernung von Pyridin, das bekanntlich bei

der Herstellung in homogener Lösung in molaren Mengen eingesetzt wird. Diese Reinigung ist jedoch einerseits wegen des Kontakts der Dialysemembranen mit Blut und andererseits für die Verbesserung der Stabilität der Polyether-Polycarbonate und der daraus hergestellten Membranen von Wichtigkeit (siehe auch DE-OS 2 251 066, Seite 24 und DE-AS 2 932 737).

Die Nutzung des Phasengrenzflächenverfahrens war bisher nur möglich bei Überführung der aliphatischen Polyether in Polyether mit reaktiven Chlorkohlensäureester- oder phenolischen Endgruppen, was den Nachteil hat, daß derartige, durch vielstufige Verfahren hergestellte Polyether-Polycarbonate größere Schwankungsbereiche in den Eigenschaftstoleranzen bringen.

Da die bislang in der Praxis eingesetzten Membranen aus Cellulosehydrat oder Celluloseacetat gegenüber Membranen aus Polyetherpolycarbonat schlechtere Permeabilitäten bezüglich Substanzen mit mittleren Molekulargewichten $\bar{M}n$ von etwa 300 bis etwa 5000 haben, bestand somit ein Bedürfnis, Polyetherpolycarbonatmembranen auf einfache und sichere Weise in technischem Maßstab herzustellen, die eine gute Eigenschaftskombination, wie oben dargelegt, besitzen.

Als Reaktor für die Durchführung der erfindungsgemäßen Polyether-Polycarbonat-Herstellung kann beispielsweise ein Zwangsmischer dienen.

Die Aufarbeitung des erfindungsgemäß hergestellten Polyether-Polycarbonats beginnt zunächst durch Abtrennung der alkalischen Phase. Danach wird mit verdünnter Phosphorsäure und später mit destilliertem Wasser bis zur Elektrolytfreiheit gewaschen.

Die Aufarbeitung kann unter Abdestillation des Lösungsmittels in einem Zwangsmischer und Mahlen des Produktes, durch übliches Einengen der Lösung und Mahlen des Produktes, durch Sprühverdampfung der Lösung, durch Fällung des Polyethercarbonats aus Lösung in heißem Wasser unter Abdestillieren des organischen Lösungsmittels oder durch Fällung aus Lösung mit organischen Fällungsmitteln erfolgen.

Das Polyether-Polycarbonat wird anschließend im Vakuumtrockenschrank oder mit Luft oder mit Stickstoff getrocknet.

Geeignete organische Lösungsmittel für die erfindungsgemäße Polyether-Polycarbonat-Herstellung sind die für die thermoplastischen Polycarbonate bekannten, wie beispielsweise Methylenchlorid, Chloroform, Ethylenchlorid, 1,2-Dichlorpropan, Toluol, Chlorbenzol, oder deren Gemische.

Geeignete basische Verbindungen für die Herstellung der wäßrigen alkalischen Phase sind Lösungen von LiOH, NaOH, KOH, $Ca(OH)_2$ und/oder $Ba(OH)_2$ in Wasser.

Geeignete Katalysatoren für die Polykondensation sind

die für die Polycarbonatsynthese bekannten tertiären aliphatischen Aminkatalysatoren, wie Trimethylamin, Triethylamin, n-Tripropylamin, n-Tributylamin oder N-Ethylpiperidin; gegebenenfalls können auch die bekannten quarternären Ammoniumsalze wie beispielsweise Tetrabutylammoniumbromid eingesetzt werden.

Die Mengen an wäßrig alkalischer Phase sind volumenmäßig vorzugsweise gleich der Menge der gesamten organischen Phase. Sie können allerdings volumenmäßig auch größer oder kleiner als die gesamten Mengen der organischen Phase sein. Bevorzugter pH-Bereich der wäßrigen Phase ist pH 13 bis 14, wobei ein pH von 14 besonders bevorzugt wird.

Als Carbonatspender für die erfindungsgemäße Herstellung der Polyether-Polycarbonate dienen in bekannter Weise Kohlensäurehalogenide, wie beispielsweise Phosgen oder $COBr_2$, insbesondere Phosgen.

Die jeweils einzusetzenden Reaktantenverhältnisse von Bisphenolen zu Polyethern richten sich nach dem zu erzielenden Gehalt an hydrophilen Polyether-Anteilen und den hydrophoben aromatischen Carbonat-Einheiten, wobei die quantitative Umsetzung der Reaktanden gegeben ist.

Erfindungsgemäß in Kombination mit Bisphenol-A einzusetzende andere Diphenole sind andere Bis-(hydroxyphenyl)-alkane als Bisphenol-A, sind Dihydroxydiphenyle, Bis-(hydroxyphenyl)-cycloalkane, Bis-(hydroxyphenyl)-sulfide, Bis-(hydroxyphenyl)-ether, Bis-(hydroxyphenyl)-sulfone und $\alpha$, $\alpha$ -Bis-(hydroxyphenyl)-diisopropylbenzole sowie deren kernalkylierte Verbindungen.

Erfindungsgemäß einzusetzende andere Diphenole sind insbesondere solche der Formel (IV)

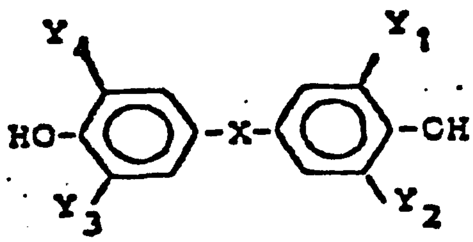

(IV)

worin

X eine Einfachbindung $-CH_2-$, 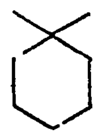 , $-C(CH_3)_2-$, O, S, $SO_2$

oder 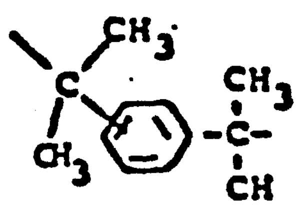 bedeuten und

$Y_1$ bis $Y_4$ gleich oder verschieden sind, und Wasserstoff oder $C_1$-$C_4$-Alkyl, vorzugsweise H oder Methyl bedeuten,

wobei im Falle von mindestens einem Alkylsubstituenten Y, X auch noch 2,2-Isopropyliden sein kann.

Geeignete andere Diphenole sind beispielsweise

2,4-Bis-(4-hydroxyphenyl)-2-methylbutan,
1,1-Bis-(4-hydroxyphenyl)-cyclohexan,
α,α-Bis-(4-hydroxyphenyl)-p-diisopropylbenzol,
2,2-Bis-(3-methyl-4-hydroxyphenyl)-propan,
Bis-(3,5-dimethyl-4-hydroxyphenyl)-methan,
2,2-Bis-(3,5-dimethyl-4-hydroxyphenyl)-propan,
Bis-(3,5-dimethyl-4-hydroxyphenyl)-sulfon,
2,4-Bis-(3,5-dimethyl-4-hydroxyphenyl)-2-methylbutan,
1,1-Bis-(3,5-dimethyl-4-hydroxyphenyl)-cyclohexan und
α, α'Bis(3,5-dimethyl-4-hydroxyphenyl)-p-diisopropylbenzol.

Bevorzugte andere Diphenole sind 1,1-Bis-(4-hydroxyphenyl)-cyclohexan und 2,2-Bis-(3,5-dimethyl-4-hydroxyphenyl)-propan.

Die einzusetzenden anderen Diphenole können sowohl mit 2,2-Bis-(4-hydroxyphenyl)-propan allein als auch zu mehreren kombiniert werden.

Erfindungsgemäß einzusetzende Polyetherdiole sind vorzugsweise Polyethylenglykole, wie die der Firmen Union Carbide (Carbowax$^{(R)}$), British Petrol (BP) (Breox$^{(R)}$), Hoechst (Polyglykol$^{(R)}$) und Hüls (Polywachs$^{(R)}$) mit Molekulargewichten $\bar{M}n$ (Zahlenmittelmolekulargewicht) von 600 bis 20 000, bevorzugt von 4000 bis 10 000, und wobei außerdem eine enge Molekulargewichtsverteilung bevorzugt ist. ($\bar{M}n$ ist in bekannter Weise ermittelt durch die Bestimmung der OH-Zahl).

Außer den genannten handelsüblichen Polyethylenglykolen können auch andere aliphatische, OH-gruppenhaltige Polyether, z.B. Polyethylen-Polypropylenoxidglykole oder Polybutylenoxidglykole mit Molekulargewichten $\bar{M}n$ (Zahlenmittelmolekulargewicht) von 600 bis 20 000, bevorzugt von 4000 bis 10 000, erfindungsgemäß eingesetzt werden, wobei $\bar{M}n$ wie vorstehend beschrieben ermittelt ist.

Als Kettenabbrecher sind die üblicherweise gebräuchlichen Phenole, wie beispielsweise Phenol und p-tert.-Butylphenol einsetzbar. Die Menge an Kettenabbrecher bestimmt sich nach dem jeweils einzustellenden Molekulargewicht der jeweils herzustellenden Polyether-Polycarbonate,, wobei quantitativer Umsatz der Reaktionspartner zugrundezulegen ist.

Die nach dem erfindungsgemäßen Verfahren hergestellten hochmolekularen Polyether-Copolycarbonate sollen mittlere Molekulargewichte $\bar{M}w$ (Gewichtsmittel) von 50 000 bis 350 000, vorzugsweise von 100 000 bis 250 000 besitzen, ermittelt nach der Lichtstreumethode mit dem Streulichtphotometer. Die relativen Lösungsviskositäten $\eta_{rel}$ (gemessen an Lösungen von 0,5 g in 100 ml $CH_2Cl_2$ bei 25°C) der nach dem erfindungsgemäßen Verfahren erhaltenen hochmolekularen Polyether-Polycarbonate liegen zwischen 1,5 und 3,8, vorzugsweise zwischen 1,6 und 3, insbesondere zwischen 2,0 und 2,8.

Die Zusammensetzung der Polyether-Copolycarbonate soll vorzugsweise aus etwa 70 Gew.-% bis 90 Gew.-% Carbonat-Struktureinheiten der Formel (I) und 10 Gew.-%

bis 30 Gew.-% Polyethercarbonat-Struktureinheiten der Formel (II) und gegebenenfalls noch Arylcarbonatstruktureinheiten der Formel (III) bestehen.

Geeignete phenolische Stabilisatoren für die Durchführung des erfindungsgemäßen Verfahrens sind beispielsweise 4-Methoxyphenol, 3-tert.-Butyl-methoxyphenol, 2-tert.-Butyl-4-methoxyphenol, 4-Phenoxyphenol, 2-Phenoxyphenol, 2,6-Di-tert.-butyl-4-methylphenol, 3-(3,5-Di-tert.-butyl-4-hydroxyphenyl)-propionat (Irganox$^{(R)}$ 1010), 1,6-Hexandiol-bis-3-(3,5-di-tert.-butyl-4-hydroxyphenyl)-propionat (Irganox$^{(R)}$ 259), Triethylenglykol-bis-3-(tert.-butyl-4-hydroxy-5-methylphenyl)-propionat (Irganox$^{(R)}$ 245) und 1,3,5-Tris-(4-tert.-butyl-3-hydroxy-2,5-dimethylbenzyl)-1,3,5-triazin-2,4,6-(1H,3H,5H)-trion (Cyanox$^{(R)}$ 1790).

Besonders bevorzugte Stabilisatoren sind: 3-tert.-Butyl-4-methoxyphenol, 2-tert.-Butyl-4-methoxyphenol, 2,6-Di-tert.-butyl-4-methylphenol, 3-(3,5-Di-tert.-butyl-4-hydroxyphenyl)-propionat und 1,3,5-Tris-(4-tert.-butyl-(3-hydroxy-2,5-dimethylbenzyl)-1,3,5-triazin-2,4,6-(1H,3H,5H)-trion.

Die Stabilisatoren können alleine oder im Gemisch miteinander verwendet werden.

Bevorzugte phenolische Stabilisatoren sind sterisch gehinderte Phenole.

Für die Membranherstellung geeignete, mit Wasser mischbare organische Lösungsmittel sind

beispielsweise 1,3-Dioxolan, 1,3-Dioxan, 1,4-Dioxan, Tetrahydrofuran, $\gamma$-Butyrolacton, Acetonitril, Dimethylformamid und Dimethylsulfoxid und Gemische dieser Lösungsmittel. Als glatte Oberflächen können beispielsweise Glasplatten oder Polymerfilme dienen.

Nach dem Gießen der Mambranen werden diese gelagert, entweder bei Raumtemperatur oder bei höherer als Raumtemperatur, wobei ein Teil des Lösungsmittels verdampfen kann. Zur Herstellung der fertigen Membran wird der noch lösungsmittelhaltige Film dann mehrmals, beispielsweise 4 bis 6 mal über einen Zeitraum von 1 bis 2 Stunden in entsalztem Wasser, gewässert.

Die Prüfung der nach dem erfindungsgemäßen Verfahren erhältlichen Polyether-Copolycarbonat-Membranen auf ihre Brauchbarkeit wird im wesentlichen so durchgeführt, daß zunächst deren Transparenz bestimmt wird, indem eine Lösung aus ca. 8 bis 15 Gew.-% Polyether-Polycarbonat in 1,3-Dioxolan hergestellt wird. Anschließend werden auf einer Glasplatte Filme mit einer Naßschichtdicke von 150 bis 240 µm bezogen. Danach werden die Filme nach jeweils 30 Sekunden, 1,7 Min. und 2,5 Min. in Wasser gelegt. Die so hergestellten Membranen müssen, wenn sie als Dialysemembranen gute Permeabilitäten zeigen sollen, transparent und klar sein. Anschließend wird ihre Permeabilität für Vitamin B 12, die Ultrafiltrationsrate und ihre Berstfestigkeit bestimmt.

Wie bereits erwähnt, sind die erfindungsgemäß erhältlichen Polyether-Polycarbonat-Membranen mit oder ohne phenolischen Stabilisator, für die Dialyse, wie etwa die Hämodialyse oder die sequentielle Dialyse, die Ultrafiltration wie etwa die Hämofiltration, Pyrogenabtrennung und Plasmaphorese sowie für die Umkehrosmose geeignet.

In der Ultrafiltration können die Membranen zur Abtrennung von Wasser oder wäßrigen Lösungen oder zur Anreicherung von makromolekular gelösten Stoffen oder Suspensionen, zur Entsalzung, zur Fraktionierung oder zur Trennung von Molekülen mit hohen oder niedrigen Molekulargewichten verwendet werden. So können sie beispielsweise zur Aufarbeitung biologischer Substanzen, so z.B. von Enzymen, Hormonen, Nukleinsäuren und anderen Proteinen, oder zur Vorbereitung klinischer Proben für die Analyse, oder zur Abtrennung von Pyrogenen, Viren und Bakterien, oder zur Gewinnung von Stoffwechselprodukten aus Fermentationsprozessen oder zur Elektrophorese oder Immunelektrophorese verwendet werden.

In den nachfolgenden Beispielen sind die gelchromatographischen Untersuchungen in Tetrahydrofuran mit Styragelsäulen (Trennbereich $1 \times 10^3$ Å, $1 \times 10^4$ Å, $1 \times 10^5$ Å und $1 \times 10^6$ Å) bei Raumtemperatur durchgeführt. Zur Bestimmung diente die Eichung von Bisphenol A-Polycarbonat. Es wurden keine großen Abweichungen im Vergleich zu $\bar{M}w$-Bestimmung nach der Lichtstreumethode festgestellt.

Vergleichsversuch gemäß US-PS 4 160 791 (Pyridinverfahren)

Herstellung eines Polyether-Polycarbonats aus 72 Gew.-% 2,2-Bis-(4-hydroxyphenyl)-propan-Polycarbonat, 5 Gew.-% 1,1-Bis-(4-hydroxyphenol)-cyclohexan-Polycarbonat und 23 Gew.-% Polyethylenoxidglykol

In eine Lösung aus 336,7 g 2,2-Bis-(4-hydroxyphenyl)-propan (Bisphenol A), 23,7 g 1,1-Bis-(4-hydroxyphenyl)-cyclohexan, 120 g Polyethylenglykol mittleren Molekulargewichts von $\bar{M}n$ = 8000, 384 ml (4,77 Mol) Pyridin und 2700 ml Methylenchlorid wird unter starkem Rühren gasförmiges Phosgen mit einer Geschwindigkeit von 570 ml/min eingeleitet. Die Temperatur wird mit einem Eiswasser-Bad bei 25 $\pm$ 0,5°C gehalten. Nach 90 min bilden sich Kristalle von Pyridinhydrochlorid. Nun wird eine Lösung von 0,25 g Phenol in 12 ml Methylenchlorid zugegeben. Es wird weiter Phosgen mit gleicher Geschwindigkeit bis zur Bildung einer stabilen schwach Rosa-Färbung der Reaktionslösung, die die Beendigung der Reaktion anzeigt, eingeleitet (weitere 70 min). Das gebildete Polymer wird danach durch Verrühren des sehr viskosen Reaktionsgemisches mit einer Lösung aus 5178 ml Aceton, 1290 ml Wasser und 198 ml konz. Salzsäure gefällt. Anschließend wird der gelartige Niederschlag in einem Mischer mit heißem Wasser zu einem Feststoff/Wasser-Gemisch verarbeitet, der dann auf ein Filter überführt und mit heißem Wasser gewaschen wird. Nach dem Trocknen bei 50°C

im Vakuum werden 470 g eines weißen Copolymers erhalten. Durch IR-spektroskopische Analyse wird festgestellt, daß das Polymer 22,7 Gew.-% Polyetheranteil und 77,3 Gew.-% Polycarbonat-Anteil enthält und eine relative Viskosität von $\eta_{rel}$ = 1,99 besitzt. Nach gelchromatographischer Untersuchung hat das Polymer ein $\bar{M}w$ = 137900 und ein $\bar{M}n$ = 37040 und ein U = 2,72.

$$(U = \frac{\bar{M}w}{\bar{M}n} -1).$$

## Beispiel 1

Herstellung eines Polyether-Polycarbonats aus 23 Gew.-% Polyethylenoxidglykol ($\bar{M}n$ 8000), 72 Gew.-% 2,2-Bis-(4-hydroxyphenyl)-propan-Polycarbonat und 5 Gew.-% 1,1-Bis-(4-hydroxyphenyl)-cyclohexan-polycarbonat

In einem Rührkessel werden unter intensivem Rühren und Stickstoffatmoshäre 35 l destilliertes Wasser, 1,94 kg 2,2-Bis-(4-hydroxyphenyl)-propan (Bisphenol A), 0,137 kg 1,1-Bis-(4-hydroxyphenyl)cyclohexan und 1,5 kg 50 %ige Natronlauge vorgelegt. In diese Lösung werden 35 l Methylenchlorid und 0,69 kg Polyethylenoxidglykol mit einem mittleren Molekulargewicht von $\bar{M}n$ = 8000 hinzugefügt. Danach wird noch so lange gerührt, bis der gesamte Polyether aufgelöst ist. Nun werden innerhalb von 100 min 2,245 kg Phosgen (150 Mol-% Überschuß Phosgen, bezogen auf Bisphenole) bei 15°C eingeleitet, während gleichzeitig unter Konstanthaltung von pH 14 ca. 3,3 Liter 50 %ige Natronlauge zudosiert werden. Nach dem Phosgen-Einleiten werden 20 l Methylenchlorid und 10,27 g N-Ethylpiperidin (1 Mol-% Amin, bezogen auf Bisphenole) zugegeben. Danach wird noch 1 h gerührt. Die organische Phase wird über einen Separator abgetrennt, nacheinander mit 2 %iger Phosphorsäure, eventuell unter Zugabe eines Demulgators und schließlich mit destilliertem Wasser bis zur Elektrolytfreiheit gewaschen. Nach dem Abtrennen des Wassers wird die organische Lösung konzentriert und danach das Polyether-Polycarbonat im Vakuumtrockenschrank bei 50°C getrocknet.

Das isolierte Polyether-Polycarbonat besitzt eine relative Viskosität von $\eta_{rel}$ = 2,41.

Nach gelchromatographischer Untersuchung ist der gesamte Polyether im Cokondensat eingebaut.

Nach dieser Untersuchung besitzt das Polymer folgende Kennzahlen:

$\bar{M}w$ 228.500
$\bar{M}n$ 18.300

$$U = \frac{\bar{M}w}{\bar{M}n} - 1 = 11,48$$

Die IR-Analyse zeigt, daß das Polymer aus 22,7 % Polyether und 77,3 % aromatischem Polycarbonat besteht.

Beispiel 2

Herstellung eines Polyether-Polycarbonats aus 23 Gew.-% Polyethylenoxidglykol ($\bar{M}n$ 6000), 72 Gew.-% 2,2-Bis-(4-hydroxyphenyl)-propan-Polycarbonat und 5 Gew.-% 1,1-Bis-(4-hydroxyphenyl)-cyclohexan-Polycarbonat

In einem Rührkessel werden unter intensivem Rühren und Stickstoffatmosphäre 7,45 l destilliertes Wasser, 0,715 l 50 %ige Natronlauge und 1,94 kg 2,2-Bis-(4-hydroxyphenyl)-propan (Bisphenol A) und 0,137 kg 1,1-Bis-(4-hydroxyphenyl)-cyclohexan vorgelegt. Nach Aufschlämmung

der Bisphenole werden 5,1 l Methylenchlorid und 0,690 kg Polyethylenoxidglykol mit einem mittleren Molekulargewicht von $\bar{M}n$ = 6000 hinzugefügt. Danach wird noch so lange gerührt, bis der gesamte Polyether aufgelöst ist. Nun werden innerhalb von 100 min 2,245 kg Phosgen (150 Mol-% Überschuß Phosgen, bezogen auf Bisphenole) bei 15 °C eingeleitet, während gleichzeitig unter Konstanthaltung von pH 14 ca. 3,6 Liter 50 %ige Natronlauge zudosiert werden.

Das Reaktionsgemisch wird in einen Zwangsmischer gegeben und mit einer Lösung aus 10,27 g N-Ethylpiperidin (1 Mol-% Amin, bezogen auf Bisphenole) und 100 ml Methylenchlorid versetzt. Nach ca. 45 min wird unter Konstanthaltung von pH 14 ein hochmolekulares Produkt erhalten. Das Reaktionsgemisch wird noch 30 min unter evtl. Zugabe von Methylenchlorid zu einer teigartigen Masse verarbeitet.

Anschließend wird die alkalische, wäßrige Phase abgelassen und mit destilliertem Wasser bis pH 10 gewaschen. Nun wird der Teig in dem Zwangsmischer 2 mal mit verdünnter Phosphorsäure gewaschen. Danach wird so lange mit destilliertem Wasser gewaschen, bis das Produkt elektrolytfrei ist. Gegen Ende des Waschvorgangs zerfällt das Produkt unter Verdampfen von Methylenchlorid in Kugeln. Das Polyether-Polycarbonat kann dann gemahlen und 24 h im Vakuumtrockenschrank oder mit Luft oder mit Stickstoff bei 50-60°C getrocknet werden.

Das so isolierte Polyether-Polycarbonat besitzt eine relative Viskosität $\eta_{rel}$ = 2,72.

Nach gelchromatographischer Analyse ist der Polyether im Cokondensat völlig eingebaut. Nach dieser Untersuchung besitzt das Polymer ein

$\bar{M}w$ 228.600
$\bar{M}n$ 21.430

$$U = \frac{\bar{M}w}{\bar{M}n} -1 = 9,67$$

Die IR-Analyse zeigt, daß das Polymer aus 22,8 Gew.-% Polyether und 77,2 Gew.-% aromatischem Polycarbonat besteht.

Beispiel 3

Herstellung eines Polyether-Polycarbonats aus 19 Gew.-% Polyethylenoxidglykol ($\bar{M}n$ 8000), 76 Gew.-% 2,2-Bis-(4-hydroxyphenyl)-propan-Polycarbonat und 5 Gew.-% 1,1-Bis-(4-hydroxyphenyl)-cyclohexan-Polycarbonat

In einem Rührkessel werden unter intensivem Rühren und Stickstoffatmosphäre 7,45 l destilliertes Wasser und 0,75 l 50 %ige Natronlauge, 2,047 kg 2,2-Bis-(4-hydroxyphenyl)-propan (Bisphenol A), 0,137 kg 1,1-Bis-(4-hydroxyphenyl)-cyclohexan und 6 g p-tert.-Butylphenol als Kettenabbrecher vorgelegt. Nach Aufschlämmung der Bisphenole werden 5,1 l Methylenchlorid und 0,57 kg Polyethylenoxidglykol mit einem mittleren Molekulargewicht von $\bar{M}n$ = 8000 hinzugefügt. Danach wird noch so lange gerührt, bis der gesamte Polyether aufgelöst ist. Nun werden innerhalb von 100 min 2,36 kg Phosgen (150 % Überschuß, bezogen auf Bisphenole) bei 15°C eingeleitet, während gleichzeitig unter Konstanthaltung von pH 14 ca. 3,8 Liter 50 %ige Natronlauge zudosiert werden. Das Reaktionsgemisch wird in einen Zwangsmischer gegeben und mit einer Lösung aus 10,8 g N-Ethylpiperidin und 100 ml Methylenchlorid versetzt. Nach ca. 45 min wird unter Konstanthaltung von pH 14 ein hochmolekulares Produkt erhalten. Die weitere Aufarbeitung des Copolymeren erfolgt gemäß Beispiel 2.

Das isolierte Polyether-Polycarbonat hat eine relative Viskosität von $\eta_{rel}$ = 2,42.

Nach gelchromatographischer Analyse ist der Polyether im Cokondensat völlig eingebaut. Nach dieser Untersuchung besitzt das Polymer folgende Kennzahlen:

$\bar{M}w$   182.900
$\bar{M}n$   45.840

$$U = \frac{\bar{M}w}{\bar{M}n} -1 = 2,9$$

Die IR-Analyse zeigt, daß das Polymer aus 18,8 Gew.-% Polyether und 81,2 Gew.-% aromatischem Polycarbonat besteht.

## Beispiel 4

Herstellung eines Polyether-Polycarbonats aus 19 Gew.-% Polyethylenoxidglykol ($\bar{M}n$ 8000), 76 Gew.-% 2,2-Bis-(4-hydroxyphenyl)-propan-Polycarbonat und 5 Gew.-% 2,2-Bis-(3,5-Dimethyl-4-hydroxyphenyl)-propan-Polycarbonat

In einem Rührkessel werden unter intensivem Rühren und Stickstoffatmosphäre 7,45 l destilliertes Wasser und 0,75 l 50 %ige Natronlauge, 2,181 kg 2,2-Bis-(4-hydroxyphenyl)-propan (Bisphenol A) 0,137 kg 2,2-Bis-(3,5-Dimethyl)-4-hydroxyphenyl)propan und 3 g p-tert.-tert.-Butylphenol als Kettenabbrecher vorgelegt. Nach Aufschlämmung des Bisphenols werden 5,1 l Methylenchlorid und 0,57 kg Polyethylenoxidglykol mit einem mittleren Molekulargewicht von $\bar{M}n$ = 8000 hinzugefügt. Danach wird noch so lange gerührt, bis der gesamte Polyether aufgelöst ist. Nun werden innerhalb von 100 min 2,36 kg Phosgen (150 % Überschuß, bezogen auf Bisphenole) bei 15°C eingeleitet, während gleichzeitig unter Konstanthaltung von pH 14 ca. 3,8 Liter 50 %ige Natronlauge zudosiert werden. Das Reaktionsgemisch wird in einen Zwangsmischer gegeben und mit einer Lösung aus 16,2 g N-Ethylpiperidin und 100 ml Methylenchlorid versetzt. Nach ca. 45 min wird unter Konstanthaltung von pH 14 ein hochmolekulares Produkt erhalten. Die weitere Aufarbeitung des Copolymeren erfolgt gemäß Beispiel 2.

Das isolierte Polyether-Polycarbonat hat eine relative Viskosität von $\eta_{rel}$ = 2,66.

0136621

Die IR-Analyse zeigt, daß das Polymer aus 18,9 Gew.-% Polyether und 81,1 Gew.-% aromatischem Polycarbonat besteht.

Beispiel 5

Herstellung eines stabilisierten Polyether-Polycarbonats aus 23 Gew.-% Polyethylenoxydglykol ($\bar{M}n$ 8000), 72 Gew.-% 2,2-Bis-(4-hydroxyphenyl)-propan-Polycarbonat und 5 Gew-% 1,1-Bis-(4-hydroxyphenyl)-cyclohexan-polycarbonat

Gemäß Beispiel 1 werden unter intensivem Rühren 1,94 kg 2,2-Bis-(4-hydroxyphenyl)-propan, 0,137 kg 1,1-Bis-(4-hydroxyphenyl)-cyclohexan, 0,69 kg Polyethylenoxydglykol ($\bar{M}n$ 8000) und 2,245 kg Phosgen nach dem Phasengrenzflächenverfahren umgesetzt und anschließend mit 10,27 g N-Ethylpiperidin cokondensiert.

Nach Reinigung der organischen Phase (gemäß Beispiel 1) in einem Separator bis zur Elektrolytfreiheit wird das Wasser von der organischen Phase getrennt.

Zu der organischen Phase werden 0,3 g (100 ppm) 1,3,5-Tris-(4-tert.-butyl-3-hydroxy-2,5-dimethylbenzyl)-1,3,5-triazin-2,4,6-(1H,3H,5H)-trion, gelöst in 50 ml Methylenchlorid, gegeben.

Die organische Lösung wird konzentriert. Anschließend wird das Polyether-Polycarbonat bei 50°C im Vakuumtrockenschrank getrocknet.

Das isolierte Polyether-Polycarbonat besitzt eine Viskosität von $\eta_{rel}$ = 2,47.

Beispiel 6

Herstellung eines stabilisierten Polyether-Polycarbonats aus 23 Gew.-% Polyethylenoxydglykol ($\bar{M}n$ 6000), 72 Gew.-% 2,2-Bis-(4-hydroxyphenyl)-propan und 5 Gew.-% 1,1-Bis-(4-hydroxyphenyl)-cyclohexan-polycarbonat

Gemäß Beispiel 2 werden unter intensivem Rühren 1,94 kg 2,2-Bis-(4-hydroxyphenyl)-propan, 0,137 kg 1,1-Bis-(4-hydroxyphenyl)-cyclohexan, 0,69 kg Polyethylenoxydglykol ($\bar{M}n$ 6000) und 2,245 kg Phosgen nach dem Phasengrenzflächenverfahren umgesetzt. Durch Zugabe von 10,27 g N-Ethylpiperidin wird anschließend in einem Zwangsmischer cokondensiert und gemäß Beispiel 2 bis zur Elektrolytfreiheit gewaschen. Anschließend werden zu der teigartigen Masse 0,3 g (100 ppm) 1,3,5-Tris-(4-tert.-butyl-(3-hydroxy-2,5-dimethylbenzyl)-1,3,5-triazin-2,4,6-(1H,3H,5H)-trion, gelöst in 50 ml Methylenchlorid (eventuell auch als Pulver), gegeben. Danach wird so lange gemischt, bis das Polyether-Polycarbonat in Kugeln zerfällt. Die weitere Aufarbeitung erfolgt durch Mahlung und Trocknung im Vakuumtrockenschrank bei 50°C.

Das isolierte Polyether-Polycarbonat besitzt eine Viskosität von $\eta_{rel}$ = 2,76.

Beispiel 7

Herstellung eines stabilisierten Polyether-Polycarbonats aus 19 Gew.-% Polyethylenoxydglykol ($\bar{M}n$ 8000), 76 Gew.-% 2,2-Bis-(4-hydroxyphenyl)-propan-polycarbonat und 5 Gew.-% 1,1-Bis-(4-hydroxyphenyl)-cyclohexan-polycarbonat

Gemäß Beispiel 3 werden unter intensivem Rühren 2,047 kg 2,2-Bis-(4-hydroxyphenyl)-propan, 0,137 kg 1,1-Bis-(4-hydroxyphenyl)-cyclohexan, 6 g p-tert.-Butylphenat, 0,57 kg Polyethylenoxydglykol ($\bar{M}n$ 8000) und 2,36 kg Phosgen nach dem Phasengrenzflächenverfahren umgesetzt. Durch Zugabe von 10,8 g N-Ethylpiperidin wird anschließend in einem Zwangsmischer cokondensiert und gemäß Beispiel 2 bis zur Elektrolytfreiheit gewaschen. Anschließend werden zu der teigartigen Masse 0,3 g (100 ppm) 1,3,5-Tris-(4-tert.-butyl-3-hydroxy-2,5-dimethylbenzyl)-1,3,5-triazin-2,4,6-(1H,3H,5H)-trion, gelöst in 50 ml Methylenchlorid, gegeben. Danach wird so lange gemischt, bis das Polyether-Polycarbonat in Kugeln zerfällt. Die weitere Aufarbeitung erfolgt durch Mahlung und Trocknung im Vakuumtrockenschrank bei 50°C.

Das isolierte Polyether-Polycarbonat besitzt eine Viskosität von $\eta_{rel}$ = 2,55.

Membranherstellung und Prüfung

12 g Polyether-Polycarbonat des Vergleichsbeispiels und der Beispiele 1 bis 4 werden in 88 g 1,3-Dioxolan bei 70°C unter Rühren gelöst.

Die Lösung wird über eine Drucknutsche filtriert und anschließend auf Raumtemperatur abgekühlt. In staubfreier Luft wird die Lösung auf eine Glasplatte aufgerakelt. Der lösungsmittelhaltige 100-150 µm dicke Film wird nach 1,7 min in destilliertes Wasser bei Raumtemperatur gegeben.

Die gebildete Membran wird 2 h in Wasser bei Raumtemperatur aufbewahrt.

Anschließend wird ihre Permeabilität für Vitamin $B_{12}$, die Ultrafiltrationsrate (UFR) sowie die Berstfestigkeit bestimmt.

Die Ergebnisse sind in Tabelle I und II zusammengefaßt.

Der gezielte Einfluß anderer Bisphenole auf das Kristallisationsverhalten von Polyether-Polycarbonaten aus 2,2-Bis-(4-hydroxyphenyl)-propan (Bisphenol A) und deren Membranen im Vergleich zu reinen Polyether-Polycarbonaten aus Bisphenol A in Bezug auf die Schmelzenthalpie ist in Tabelle III zusammengefaßt.

Die Schmelzenthalpien wurden nach der Differential-Scanning-Calometrie (DSC) mit einem Perkin-Elmer II-Gerät gemessen.

Tabelle IV zeigt in Versuchen den stabilisierenden Einfluß phenolischer Stabilisatoren während des Trocknens mit Luft von unterschiedlichen Temperaturen und nach Lagerung im Vergleich zu unstabilisierten Polyether-Polycarbonaten.

Tabelle I

| Flachmembran | Ultrafiltrationsrate UFR $\frac{ml}{h.m^2.mm\ Hg}$ | Diff. Permeabilität /Vit. $B_{12}$ cm/sec/ | /Chlorid cm/Sec/ | Berstfestigkeit /cm Hg/ | Dicke /µm/ |
|---|---|---|---|---|---|
| Beispiel 1 | $3,3 \times 10^{-3}$ | $1,8 \times 10^{-4}$ | $10,2 \times 10^{-4}$ | 28 | 16 |
| Beispiel 2 | $2,4 \times 10^{-3}$ | $1,3 \times 10^{-4}$ | $9,8 \times 10^{-4}$ | 23 | 17 |
| Beispiel 3 | $2,8 \times 10^{-3}$ | $1,6 \times 10^{-4}$ | $10,8 \times 10^{-4}$ | 25 | 17 |
| Beispiel 4 | $2,5 \times 10^{-3}$ | $1,5 \times 10^{-4}$ | $10,6 \times 10^{-4}$ | 26 | 16 |
| Vergleichsversuch | $2,8 \times 10^{-3}$ | $1,6 \times 10^{-4}$ | $9,9 \times 10^{-4}$ | 22 | 18 |

Tabelle II: Optisches Aussehen der Membran

| Produkt | Aussehen der Membranen nach unterschiedlicher Lagerzeit der lösungsmittelhaltigen Filme an Luft vor Eintauchen in Wasser | | |
|---|---|---|---|
| | 0,5 min | 1,7 min | 2,5 min |
| Vergleichsversuch | fast transparent | transparent | transparent |
| Beispiel 1 | " | " | " |
| Beispiel 2 | " | " | " |
| Beispiel 3 | " | " | " |
| Beispiel 4 | " | " | " |

Tabelle III

| Polyether-Polycarbonate aus Bisphenol A-PC und 5 Gew.-% eines anderen Bisphenol-PC | Schmelzenthalpie Rohprodukt [J/g] | Schmelzenthalpie der Membran nach Herstellung [J/g] | Schmelzenthalpie der Membran nach Lagerung von 2 Monaten [J/g] |
|---|---|---|---|
| Beispiel 1 | 6,6 | 0,3 | 0,3 |
| Beispiel 2 | 2,9 | 0,2 | 0,25 |
| Beispiel 3 | 4,1 | 0,25 | 0,3 |
| Beispiel 4 | 4,8 | 0,25 | 0,3 |
| Vergleichsversuch | 14,7 | 2,0 | 2,4 |
| Polyether-Polycarbonate aus reinem Bisphenol A-PC* | | | |
| Vergleich zu Beispiel 1 | 11,8 | 0,9 | 1,4 |
| Vergleich zu Beispiel 2 | 10,7 | 0,8 | 1,1 |
| Vergleich zum Vergleichsversuch | 24,2 | 3,0 | 3,5 |

* Hergestellt wurden diese Vergleichsbeispiele gemäß deutscher Patentanmeldung P 33 29 975.7 vom 19. 8.1983

Tabelle IV - Versuche zur Stabilisierung von Polyether-Polycarbonaten

| Beisp. | Stabilisatoren /ppm/ | Trocknung 1 (24h mit Luft bei 50°C) /η rel/ | Trocknung 2 (24h mit Luft bei 90°C) /η rel/ | Nach Lagerung von 2 Monaten bei 25°C, Trocknung 1: /η rel/ | Trocknung 1: Formalingeruch | Trocknung 2: /η rel/ | Trocknung 2: Formalingeruch |
|---|---|---|---|---|---|---|---|
| 1 | - | 2,36 | 2,21 | 2,28 | kein Geruch | 2,08 | schwacher Geruch |
| 2 | - | 2,64 | 2,42 | 2,56 | kein Geruch | 2,24 | schwacher Geruch |
| 3 | - | 2,35 | 2,16 | 2,24 | schwacher G. | 1,98 | Geruch |
| 5 | 100 (A) | 2,45 | 2,39 | 2,43 | kein Geruch | 2,37 | kein Geruch |
| 6 | 100 (A) | 2,76 | 2,72 | 2,75 | " | 2,69 | " |
| 7 | 100 (A) | 2,54 | 2,51 | 2,55 | " | 2,48 | " |
| 7a | 200 (A) | 2,55 | 2,52 | 2,56 | " | 2,50 | " |
| 7b | 100 (B) | 2,45 | 2,40 | 2,45 | " | 2,38 | " |
| 7c | 200 (B) | 2,48 | 2,45 | 2,48 | " | 2,40 | " |
| 7d | 100 (C) | 2,50 | 2,46 | 2,49 | " | 2,45 | " |
| 7e | 200 (C) | 2,51 | 2,48 | 2,51 | " | 2,47 | " |

A = 1,3,5-Tris-(4-tert.-butyl-3-hydroxy-2,5-dimethylbenzyl)-1,3,5-triazin-2,4,6-(1H,3H,5H)-trion

B = 2-tert.-butyl-4-methoxyphenol

C = 3-(3,5-di-tert.-butyl-4-hydroxyphenyl)-propionat

Patentansprüche

1. Verfahren zur Herstellung von segmentierten aliphatisch-aromatischen Polyether-Copolycarbonaten mit $\bar{M}w$ (Gewichtsmittel) von 50 000 bis 350 000 und mit etwa 95 Gew.-% bis etwa 65 Gew.-% aromatischen Carbonat-Struktureinheiten der Formel (I)

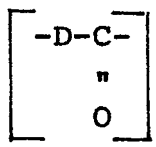

(I),

worin -D- ein Diphenolatrest ist, und etwa 5 Gew.-% bis etwa 35 Gew.-% Polyethercarbonat-Struktureinheiten der Formel (II)

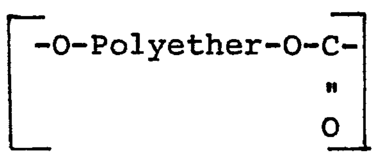

(II),

worin -O-Polyether-O- ein aliphatischer Polyetherdiolat-Rest mit $\bar{M}n$ von 600 bis 20 000 ist, und gegebenenfalls außerdem noch Arylcarbonat-Struktureinheiten der Formel (III)

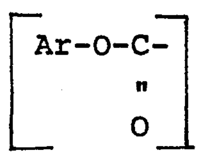

(III)

worin Ar ein carbocyclischer, aromatischer Rest ist, nach dem Phasengrenzflächenverfahren in einem Gemisch aus organischem Lösungsmittel und wäßriger alkalischer Phase bei Temperaturen von 0°C bis 35°C, aus entsprechenden Mengen an aliphatischen Polyetherdiolen mit $\bar{M}n$ von 600 bis 20 000, Diphenolen, Kohlensäurehalogeniden und gegebenenfalls monophenolischen Kettenabbrechern, das dadurch gekennzeichnet ist, daß

a) ein Kohlensäurehalogenid in einem molaren Überschuß, bezogen auf Mole an organischen Dihydroxyverbindungen, eingesetzt und die einzusetzenden Diphenole aus 50 Gew.-% bis 99 Gew.-% an Bisphenol-A und aus 50 Gew.-% bis 1 Gew.-% an anderen Diphenolen bestehen,

b) die wäßrige Phase bei einem pH-Wert von mindestens 13 gehalten wird und

c) durch Zugabe eines Aminkatalysators in einem Reaktor polykondensiert wird,

wobei das Polyetherpolycarbonat über die organische Phase in bekannter Weise gereinigt, isoliert und getrocknet wird.

2. Verfahren gemäß Anspruch 1, dadurch gekennzeichnet, daß man

d) nach der Polykondensation, aber vor der Isolierung des Polyether-Copolycarbonats einen phenolischen Stabilisator in Mengen von 10 bis 1000 ppm, bezogen auf Gewicht Polyether-Copolycarbonat, zusetzt.

3. Verfahren zur Herstellung von Polyether-Copolycarbonat-Membranen einer Dicke von 10 µm bis 50 µm, dadurch gekennzeichnet, daß man

e) die nach den Verfahren der Ansprüche 1 oder 2 erhältlichen Polyether-Copolycarbonate in mit Wasser mischbaren organischen Lösungsmitteln in Mengen von 1 bis 20 Gew.-%, bezogen auf Gewicht Lösung, löst, nach Filtration auf einer glatten Oberfläche in bekannter Weise zu Filmen einer Naßschichtdicke von etwa 150 µm bis 240 µm gießt, und nach dem Verdampfen eines Teils des Lösungsmittels diese Filme mehrmals in entsalztem Wasser wässert.

4. Membranen, erhältlich nach dem Verfahren des Anspruchs 3.

5. Verwendung der Membranen des Anspruchs 4 für die Dialyse, die Ultrafiltration und die Umkehrosmose.